# EUROPEAN PATENT APPLICATION

(11) **EP 2 819 393 A1**
(43) Date of publication of application: **31.12.2014**
(21) Application number: 12869556.6
(22) Date of filing: 04.12.2012
(51) Int. Cl.: H04N 5/225, G02B 7/08, G03B 17/02, G03B 17/18, G06F 3/0489

(54) **PARAMETER ADJUSTING DEVICE, PARAMETER ADJUSTING METHOD AND STORAGE MEDIUM**

(30) Priority: 24.02.2012 JP 2012038322
(71) Applicant: Sony Corporation, Tokyo 108-0075 (JP)
(72) Inventor: OTSUKA, Yoshihiro, Tokyo 108-0075 (JP)
(74) Representative: Ealey, Douglas Ralph
(86) International application number: PCT/JP2012/081865
(87) International publication number: WO 2013/125132

(57) **Abstract**

An input device includes a first operation part and a second operation part. The first operation part is used to adjust a parameter for photographing or content reproduction and is arranged on a first axis. The second operation part is used to adjust the parameter for photographing or content reproduction and is arranged on a second axis which has an inclination different from an inclination of the first axis. A parameter adjustment unit, which is assigned to an operation with regard to the first operation part, is different from a parameter adjustment unit, which is assigned to an operation with regard to the second operation part.

## Description

### Technical Field

The present disclosure relates to a parameter adjustment device, a parameter adjustment method, and a recording medium. More specifically, the present disclosure relates to a parameter adjustment device, which contributes to improve an operation of electronic equipment, a parameter adjustment method, and a recording medium.

### Background Art

In recent years, improvement and diversification of the functions of electronic equipment including an imaging apparatus have been remarkable. In addition, the demands of users with regard to the electronic equipment have diversified. For example, in the imaging apparatus, there are demands for faster image zoom and more detailed image zoom.

In contrast, with the diversification of the needs of users, there is a tendency for the operation of the electronic equipment to be complicated. For example, if buttons, keys, or the like are increased in order to perform input operations, the operability by the user decreases with regard to the electronic equipment.

Therefore, for example, PTL 1 below discloses a technology in which optical zoom is performed when an operation applied to an operation part is a click operation and in which digital zoom is performed when the operation applied to the operation part is a so-called long push operation.

### Citation List

### Patent Literature

PTL 1: Japanese Unexamined Patent Application Publication No. 2004-260431

### Summary of Invention

### Technical Problem

However, in the technology disclosed in PTL 1, for example, a user should perform a detailed operation with regard to a single key. In addition, since two control methods are assigned to a single key, there is a possibility of incorrect operation.

It is desired to improve the operability of electronic equipment.

### Solution to Problem

According to a first preferable embodiment of the present disclosure, a parameter adjustment device includes a first operation part and a second operation part. The first operation part is used to adjust a parameter for photographing or content reproduction and is arranged on a first axis. The second operation part is used to adjust the parameter and is arranged on a second axis which has an inclination different from an inclination of the first axis. A parameter adjustment unit, which is assigned to an operation with regard to the first operation part, is different from a parameter adjustment unit, which is assigned to an operation with regard to the second operation part.

According to a second preferable embodiment of the present disclosure, there is provided a parameter adjustment method performed on a first operation part that is used to adjust a parameter for photographing or content reproduction and is arranged on a first axis and a second operation part that is used to adjust the parameter and is arranged on a second axis which has an inclination different from an inclination of the first axis. A parameter adjustment unit, which is assigned to an operation with regard to the first operation part, and a parameter adjustment unit, which is assigned to an operation with regard to the second operation part are different in size.

According to a third preferable embodiment of the present disclosure, there is provided a computer-readable recording medium which records a program that causes a computer to perform execution on a first operation part that is used to adjust a parameter for photographing or content reproduction and is arranged on a first axis and a second operation part that is used to adjust the parameter and is arranged on a second axis which has an inclination different from an inclination of the first axis. A parameter adjustment unit, which is assigned to an operation with regard to the first operation part, and a parameter adjustment unit, which is assigned to an operation with regard to the second operation part are different in size.

### Advantageous Effects of Invention

According to at least one of the embodiments, it is possible to improve the operability of the electronic equipment. Brief Description of Drawings
[Figs. 1A and 1B] Fig. 1A is a schematic view illustrating an example of an imaging apparatus which includes a parameter adjustment device according to an embodiment of the present disclosure. Fig. 1B is an image view illustrating an example of an image which is displayed on a display part.
[Figs. 2A and 2B] Fig. 2A is a view illustrating a schematic configuration of the imaging apparatus. Fig. 2B is a block diagram illustrating an example of the configuration of the parameter adjustment device which includes an input device, the display part, and an imaging part.
[Figs. 3A and 3B] Fig. 3A is a view illustrating the input device and the display part which are included in the imaging apparatus. Fig. 3B is a view illustrating the enlarged input device which functions as the parameter adjustment device according to the embodiment of the present disclosure.
[Figs. 4A to 4C] Figs. 4A and 4B are examples illustrating indicators which are displayed on a zoom setting screen. Fig. 4C is a flowchart illustrating an example of electronic equipment control with regard to an instruction from the input device which functions as the parameter adjustment device.
[Figs. 5A and 5B] Fig. 5A is a schematic view illustrating an imaging apparatus to which a first modification example of the parameter adjustment device is applied. Fig. 5B is a view illustrating the enlarged input device which functions as the parameter adjustment device.
[Fig. 6] Fig. 6 is a flowchart illustrating an example of electronic equipment control according to the posture of the electronic equipment.
[Figs. 7A and 7B] Fig. 7A is a schematic view illustrating an imaging apparatus to which a third modification example of the parameter adjustment device is applied. Fig. 7B is a view illustrating the enlarged input device which functions as the parameter adjustment device.
[Figs. 8A to 8C] Fig. 8A is a view illustrating an imaging apparatus which includes a parameter adjustment device according to a second embodiment. Figs. 8B and 8C are image views illustrating examples which are displayed on a display part.
[Fig. 9] Fig. 9 is a flowchart illustrating an example of electronic equipment control with regard to an instruction from the input device which functions as the parameter adjustment device.
[Figs. 10A to 10D] Fig. 10A is a front view illustrating an imaging apparatus which includes a parameter adjustment device according to a third embodiment. Fig. 10B is a back view illustrating the imaging apparatus which includes the parameter adjustment device according to the third embodiment. Fig. 10C is an image view illustrating an example of an image which is displayed on a display part. Fig. 10D is a schematic view illustrating another example of an input operation with regard to the imaging apparatus.

### Description of Embodiments

Hereinafter, embodiments of a parameter adjustment device, a parameter adjustment method, and a recording medium will be described. Description will be made as follows.
1. First Embodiment
   1-1. Schematic Configuration of Parameter Adjustment Device
      1-1-1. Imaging Apparatus
      1-1-2. Input Device
   1-2. Parameter Adjustment Device according to First Modification Example
   1-3. Parameter Adjustment Device according to Second
      Modification Example
   1-4. Parameter Adjustment Device according to Third Modification Example
2. Second Embodiment
   2-1. Schematic Configuration of Parameter Adjustment Device
3. Third Embodiment
   3-1. Schematic Configuration of Parameter Adjustment Device
4. Modification Example

Meanwhile, embodiments which will be described below are preferable concrete examples of a parameter adjustment device, a parameter adjustment method, and a recording medium. In the description below, various limitations which are technically preferable are applied. However, the examples of the parameter adjustment device, the parameter adjustment method, and the recording medium are not limited to embodiments which are illustrated below unless the gist of which limits the present disclosure is described.

### 1. First Embodiment

### 1-1. Schematic Configuration of Parameter Adjustment Device

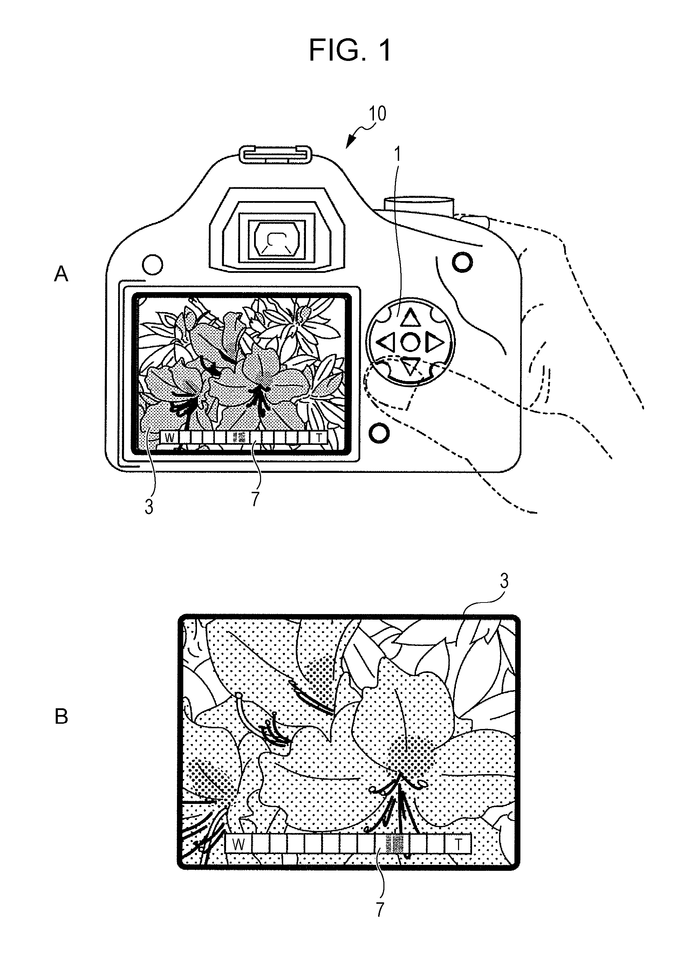

Fig. 1A is a schematic view illustrating an example of an imaging apparatus which includes a parameter adjustment device according to an embodiment of the present disclosure. Fig. 1B is an image view illustrating an example of an image which is displayed on a display part.

As shown in Fig. 1A, an input device 1 which functions as the parameter adjustment device according to the present disclosure is arranged in, for example, the housing of an imaging apparatus 10, such as a camera using a digital manner. When the parameter adjustment device is applied to, for example, the camera using the digital manner, a subject image is displayed on, for example, a display part 3 which is arranged in the housing of the imaging apparatus 10 as shown in Fig. 1A.

Fig. 1A illustrates an example of a configuration in which the magnification of the current zoom is displayed by an indicator 7. In the example of the configuration shown in Fig. 1A, the indicator 7 which shows the magnification of the current zoom is superimposed on the subject image and displayed on the display part 3.

As shown in Figs. 1A and 1B, a user of the imaging apparatus 10 can change, for example, the magnification of zoom related to the subject image by operating the input device 1 which functions as the parameter adjustment device.

Hereinafter, for the sake of easy understanding of the embodiment of the present disclosure, the general configuration of the imaging apparatus will be described first. Meanwhile, hereinafter, the imaging apparatus 10 to which the parameter adjustment device is applied will be described as a single lens reflex camera using a digital manner. However, an imaging apparatus to which the parameter adjustment device can be applied is not limited thereto. For example, it doesn't matter that the imaging apparatus 10 may be a single lens camera using the digital manner (called a mirrorless single lens digital camera), a pellicle mirror built-in camera using the digital manner, a so-called compact digital camera, or the like. 1-1-1. IMAGING APPARATUS

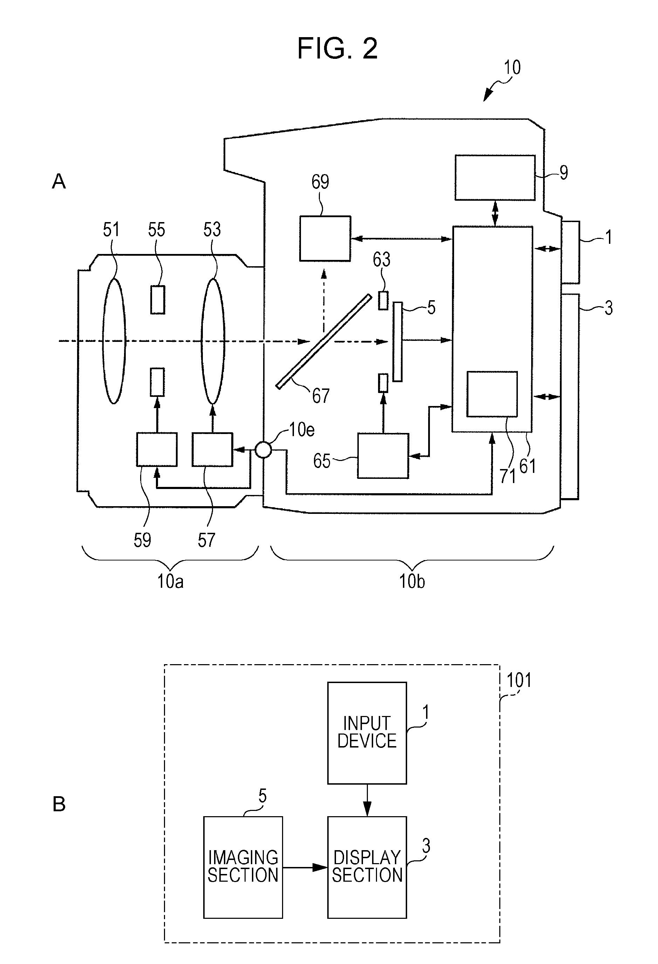

Fig. 2A is a view illustrating the schematic configuration of the imaging apparatus. Meanwhile, power and release buttons and the like are not shown in Fig. 2A as in other drawings.

As shown in Fig. 2A, the imaging apparatus 10 is configured to include, for example, a main body part 10b and a lens unit 10a which is freely detachable from the main body part 10b. It doesn't matter that the main body part 10b may be integrally formed with the lens unit 10a.

For example, lenses 51 and 53, a diaphragm 55, and the like are arranged inside the lens barrel of the lens unit 10a. For example, the lens 53 is caused to be freely movable by a lens driving mechanism 57, and optical zoom and autofocus motion are possible when the lens 53 is moved. In addition, with regard to the diaphragm 55, the opening of the diaphragm 55 is freely adjusted by a diaphragm driving mechanism 59.

The lens unit 10a is mounted on the main body part 10b and is electrically connected to the main body part 10b through an electric contact 10e. Therefore, electric power and a control signal for driving the lens driving mechanism 57 and the diaphragm driving mechanism 59 are transmitted from the main body part 10b to the lens unit 10a through the electric contact 10e.

For example, a control part 61, a storage device 9, an imaging part 5, a shutter 63, a shutter driving mechanism 65, a movable mirror 67, an imaging part 69, and the like are stored on the inside of the housing of the main body part 10b. In addition, for example, the input device 1 and the display part 3 are provided on the outside of the housing.

The control part 61 is a processing device which includes a processor, and the control part 61 is formed as, for example, a Digital Signal Processor (DSP) or a Central Processing Unit (CPU). The control part 61 controls each of the parts of the imaging apparatus 10 according to an input from the input device or the like, and displays the results of processing on the display part 3. The control part 61 trims subject-related image information, acquired by, for example, the imaging part 5 which will be described later, according to an input from the input device 1, and displays the results of digital zoom on the display part 3.

Programs for performing various types of operation processes or for controlling each of the parts of the imaging apparatus 10 are stored in, for example, a storage part 71 which is arranged in the control part 61, the storage device 9 which is connected to the control part 61, or the like.

The storage device 9 includes, for example, an external storage device which is freely detachable from the imaging apparatus 10, and an internal storage device which is fixed to the inside of the main body part. Image data which is acquired through photographing is maintained in the storage device 9. For example, the user can arbitrarily set any of the external storage device or the internal storage device in which the image data is maintained.

The imaging part 5 and the imaging part 69 include an imaging element, such as a Charge-Coupled Device (CCD) or a Complementary Metal-Oxide Semiconductor (CMOS), and acquire the subject-related image information through photoelectric conversion.

The movable mirror 67, which is capable of jumping up upward, is arranged inside of the main body part 10b on the front of the imaging part 5. The movable mirror 67 is a mirror for performing conversion on light from the subject such that the light reaches any of the imaging part 5 and the imaging part 69.

For example, as shown in Fig. 2A, in a state in which the movable mirror 67 is inclined with regard to an optical axis related to the light from the subject, the light from the subject is reflected in the movable mirror 67, and thus the light from the subject is incident to the imaging part 69. At this time, after an image process, such as digital gain adjustment, gamma correction, color correction, or contrast correction, is performed on an image signal, which is acquired by the imaging part 69, by the control part 61, and a resulting signal is supplied to the display part 3 as a picture signal.

The example in which light, which is reflected in the movable mirror 67, is guided toward the imaging part 69 is shown in Fig. 2A. However, for example, after the light, which is reflected in the movable mirror 67, is incident to a pentaprism, the light may be guided toward the optical-type finder. In this case, the user can recognize the subject through the optical-type finder.

The display part 3 which is provided on the back side or the like of the main body part 10b is, for example, a flat display such as a Liquid Crystal Display (LCD) or an organic Electroluminescence (EL) display. If necessary, the display part 3 is considered to be a touch panel, and is considered to be a display part which includes the function of the input device which receives an instruction from the user.

In contrast, if the movable mirror 67 is retracted from the optical axis related to the light from the subject, the light from the subject is guided toward the shutter 63 and the imaging part 5. When a shutter motion is performed by the shutter driving mechanism 65, the light from the subject reaches the imaging part 5, and thus the image signal related to the subject is acquired. The image signal which is acquired by the imaging part 5 is transmitted to the storage device 9 through the control part 61 according to an instruction of the user, and the image signal is maintained as image data.

### 1-1-2. Input Device

Fig. 2B is a block diagram illustrating an example of the configuration of the parameter adjustment device which includes the input device, the display part, and the imaging part. As shown as the parameter adjustment device 101 in Fig. 2B, in the camera using the digital manner, the user, for example, adjusts an angle of view by operating the input device 1 while recognizing the image which is displayed on the display part 3, and photographs the subject using a photoelectric conversion action of the imaging part 5.

More specifically, the parameter adjustment device according the embodiment of the present disclosure is formed as, for example, an operation unit for instructing the imaging apparatus to perform zoom in or zoom out in order to adjust the angle of view. As will be apparent in the description below, the parameter adjustment device according the embodiment of the present disclosure provides excellent operability to the user.

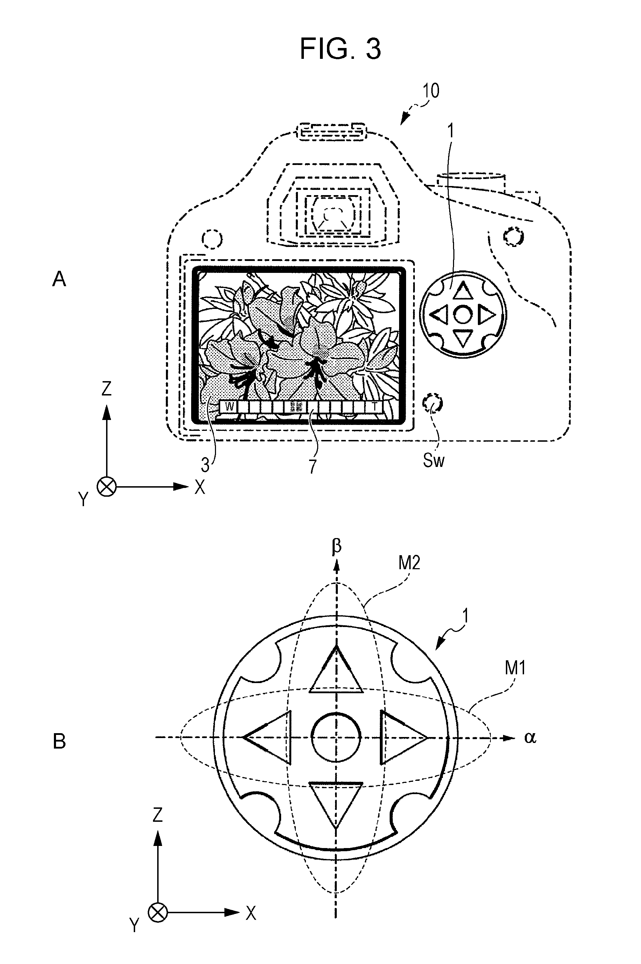

Fig. 3A is a view illustrating the input device and the display part which are included in the imaging apparatus. As shown in Fig. 3A, the input device 1 and the display part 3 are arranged, for example, on the back side of the main body part of the imaging apparatus 10. Meanwhile, in the description below, a vertical upward side is a Z axis direction, and, accordingly, it is assumed that an XY plane is a horizontal surface. That is, in a state shown in Fig. 3A, the bottom surface of the imaging apparatus 10 is approximately in parallel with a horizontal surface. Hereinafter, the state in which the bottom surface of the imaging apparatus is approximately in parallel with the horizontal surface is called "horizontal state".

Fig. 3B is a view illustrating the enlarged input device which functions as the parameter adjustment device according the embodiment of the present disclosure.

As shown in Fig. 3B, the input device 1 which functions as the parameter adjustment device includes a first operation part M1 and a second operation part M2. The first operation part M1 and the second operation part M2 are arranged on a first axis and a second axis, respectively. In Fig. 3B, the first operation part M1 and the second operation part M2 are respectively shown by surrounding with broken lines, and the first axis and the second axis are respectively shown as an "α-axis" and a "β-axis "

As shown in Fig. 3B, the first axis and the second axis have different inclinations. The first axis and the second axis are set, for example, in the directions which are approximately perpendicular to each other. Fig. 3B shows an example of a configuration in which the first axis is approximately in parallel with the X axis and the second axis is approximately in parallel with the Z axis in the horizontal state.

In the example of the configuration shown in Fig. 3B, the first axis and the second axis are set to the directions which are approximately perpendicular to each other. Therefore, the example of the configuration shown in Fig. 3B is an example in which the input device 1 is formed of a cross-shaped key which includes the first operation part M1 and the second operation part M2.

The first operation part M1 and the second operation part M2 of the input device 1 are operation parts which are used, for example, to adjust a parameter for photographing or content reproduction in the imaging apparatus. In the present disclosure, a parameter adjustment unit, which is assigned to an operation with regard to the first operation part M1, is different from a parameter adjustment unit, which is assigned to an operation with regard to the second operation part M2.

For example, a parameter for designating the degree of image zoom in a case of still image photographing may be used as an example of the parameter which is assigned to the operation with regard to the first operation part M1 or the operation with regard to the second operation part M2.

However, the cross-shaped key includes two axes, that is, the first axis and the second axis. Therefore, for example, a function to select menu items for various types of settings displayed on the display part or a function to select the image data which is displayed using thumbnail on the display part is generally assigned to the cross-shaped key. In other words, normally, a function to adjust a single parameter, such as image zoom degree, is not assigned to each of the operations with regard to the first axis of the cross-shaped key and the operation with regard to the second axis.

In the present disclosure, for example, a screen for providing an instruction to perform zoom in or zoom out (hereinafter, appropriately referred to as a "zoom setting screen") is prepared. For example, when a mode conversion button Sw is pressed down, a screen which is displayed on the display part 3 is transitioned to a zoom setting screen. As shown in Fig. 1B, the zoom setting screen is, for example, a screen in which the magnification of the current zoom is displayed by the indicator 7 while being superimposed on the subject image.

The zoom setting screen is a screen for assigning different adjustment units to the first axis and the second axis. When the parameter adjustment device includes the zoom setting screen, it is possible to effectively utilize both the first axis and the second axis in a screen of the zoom in or zoom out in the imaging apparatus. In addition, if the parameter adjustment device includes the zoom setting screen, the user can directly operate the parameter adjustment device even when a function to adjust a single parameter is assigned to each of the operations with regard to the first axis and the operation with regard to the second axis.

Hereinafter, an example in which the input device 1 which functions as the parameter adjustment device is assumed as an operation unit for providing an instruction to perform zoom in or zoom out in the case of the still image photographing will be described. Meanwhile, zoom in or zoom out in the imaging apparatus may be any of digital zoom and optical zoom.

In the present disclosure, more specifically, the operation with regard to the first operation part M1 and the operation with regard to the second operation part M2 are operations to designate the degree of image zoom. Further, in the present disclosure, as described above, it is assumed that the parameter adjustment unit which is assigned to the operation with regard to the first operation part M1 is different from the parameter adjustment unit which is assigned to the operation with regard to the second operation part M2.

More specifically, for example, an image zoom adjustment unit is set to an operation which is performed on the first operation part M1 such that the subject image which is displayed on the display part 3 is seamlessly (successively) changed according to a time at which the first operation part M1 is pressed. That is, the user can adjust the zoom magnification in the imaging apparatus 10 while recognizing the seamlessly changing image by successively operating (pressing down) the first operation part M1 for a desired time.

In order to cause the change in the subject image which is displayed on the display part 3 to be a seamless change, it is preferable that a setting be made such that the image zoom adjustment unit, which is assigned to the operation with regard to the first operation part M1, changes according to the image zoom magnification. For example, when a graph is displayed in such a way that the image zoom magnification is a horizontal axis and the image zoom adjustment unit is a vertical axis, it is preferable that the graph not be in parallel with the horizontal axis.

For example, an image zoom adjustment unit is set to the operation which is performed on the second operation part M2 such that the subject image which is displayed on the display part 3 is discretely changed according to the number of times that the second operation part M2 is pressed. That is, the user can adjust the zoom magnification in the imaging apparatus 10 while recognizing the discretely changing image by operating (pressing down) the second operation part M2 a desired number of times.

A logarithmically changing unit, for example, 1 time, 1.4 times, 2 times, 2.8 times, ... or the like, is set as the image zoom adjustment unit with regard to the operation which is performed on the second operation part M2. That is, the parameter adjustment unit which is assigned to the operation with regard to the second operation part M2 is greater than the parameter adjustment unit which is assigned to the operation with regard to the first operation part M1.

Therefore, the user can roughly adjust the angle of view by operating the second operation part M2, and can minutely adjust the angle of view by operating the first operation part M1. Meanwhile, a seamless image zoom adjustment unit may be set to the operation which is performed on the first operation part M1, and a discrete image zoom adjustment unit may be set to the operation which is performed on the second operation part M2. In this way, according to the present disclosure, it is possible to combine the seamless image zoom with the discrete image zoom and then perform the image zoom.

Meanwhile, in the present disclosure, a function to adjust a single parameter is assigned to each of the operations with regard to the first axis and the operation with regard to the second axis in a single input device. Therefore, it is preferable that the user can recognize the amount of change in a parameter accompanying the operation with regard to the first axis and the amount of change in a parameter accompanying the operation with regard to the second axis.

Here, in the present disclosure, for example, the indicator 7 which shows the magnification of the current zoom is displayed on the zoom setting screen.

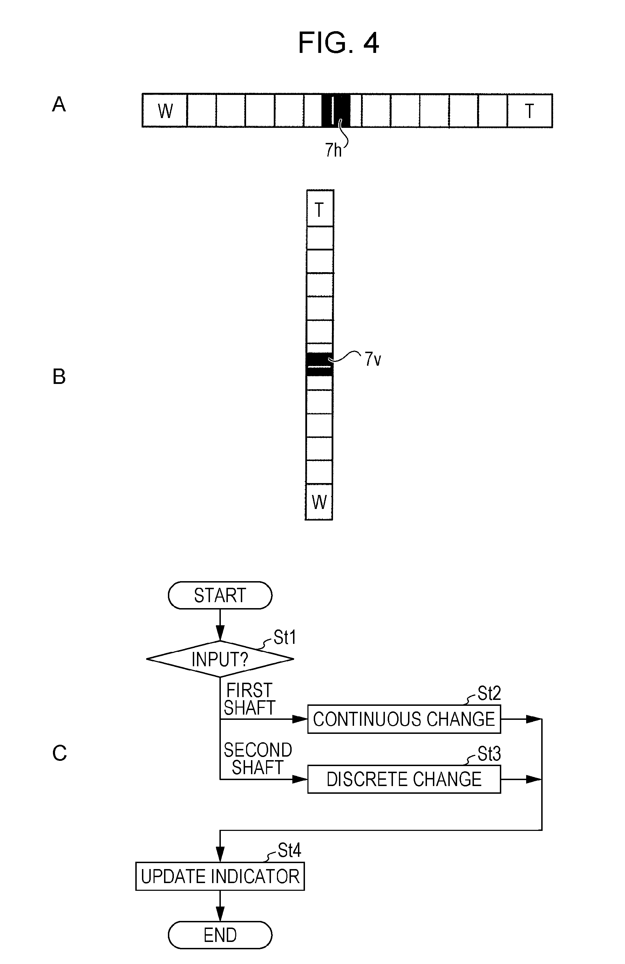

Figs. 4A and 4B are views illustrating examples of indicators which are displayed on the zoom setting screen. In Figs. 4A and 4B, the magnification of the current zoom is shown as a black square. Fig. 4A illustrates an example of an indicator 7h which is arranged in the horizontal direction, and Fig. 4B illustrates an example of an indicator 7v which is arranged in the vertical direction. Meanwhile, for example, a manufacturer of electronic equipment which includes a parameter adjustment device can arbitrarily set whether to arrange the indicator 7 in the horizontal direction or in the vertical direction.

The indicator 7 is a display for feedback of the change in the amount of parameter adjustment to the user. As shown in Figs. 4A and 4B, for example, scales are attached to the indicator 7.

The scales are attached to the indicator 7 such that the user can recognize the amount of change in a parameter due to the seamless image zoom and the amount of change in a parameter due to the discrete image zoom. Therefore, the user can determine the change in the amount of parameter adjustment due to the operation with regard to the first operation part M1 and the change in the amount of parameter adjustment due to the operation with regard to the second operation part M2 at a glance with reference to the indicator 7.

It doesn't matter that the indicator 7 may be displayed on another screen in addition to the zoom setting screen.

Fig. 4C is a flowchart illustrating an example of electronic equipment control with regard to an instruction from the input device which functions as the parameter adjustment device. A series of processes which will be described with reference to Fig. 4C are performed by, for example, the control part 61. Here, a state is assumed that the screen which is displayed on the display part 3 is transitioned to the zoom setting screen.

First, in step St1, it is determined whether or not an input is performed on the input device 1 by the user.

When an input operation which is performed by the user is the operation with regard to the first operation part M1 which is arranged on the first axis, the image which is displayed on the display part 3 is seamlessly changed in step St2. In contrast, the input operation which is performed by the user is the operation with regard to the second operation part M2 which is arranged on the second axis, and the image which is displayed on the display part 3 is discretely changed in a logarithmical step in step St3.

Subsequently, in step St4, the image of the indicator 7 is rewritten according to the change in the amount of parameter adjustment.

As described above, in the present disclosure, a function to adjust a single parameter is assigned to each of the operations with regard to the first axis and the operation with regard to the second axis in a single input device. Further, the parameter adjustment units are different from each other. Therefore, it is possible to perform the seamless image zoom and the discrete image zoom using, for example, an operation which is performed in the horizontal direction and the vertical direction in the single input device. Therefore, according to the present disclosure, it is possible to realize a seamless image zoom function and a discrete image zoom function with the same sense of operation.

Further, according to the present disclosure, compared to a case in which each of the seamless image zoom function and the discrete image zoom function is assigned to an individual input device, it is possible to perform rapid zoom in or zoom out. For example, even when the amount of zoom in or zoom out is large, it is not necessary to continuously press a zoom button, and a shutter opportunity is not lost.

### 1-2. First Modification Example of Parameter Adjustment Device

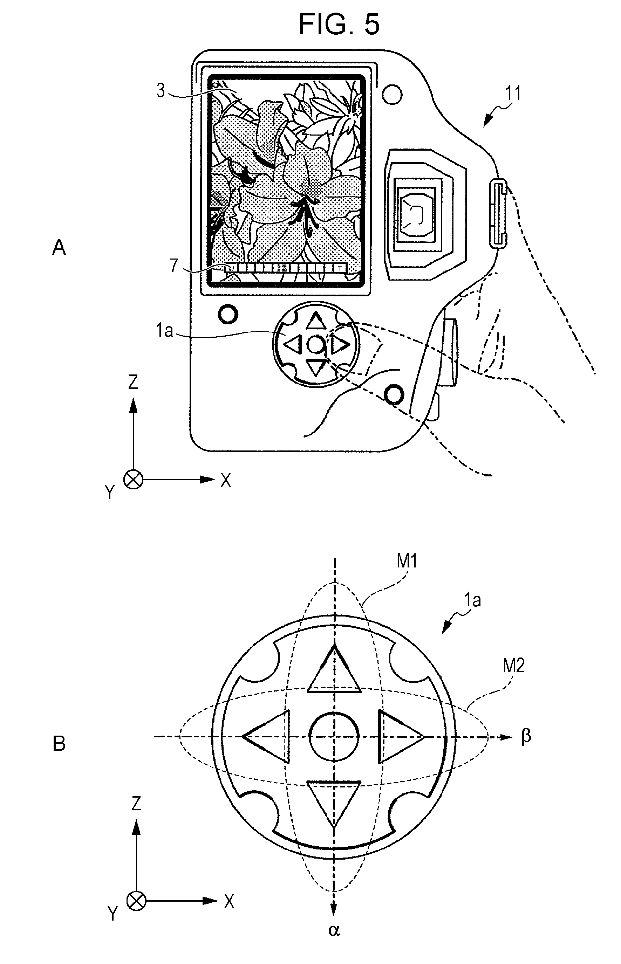

Fig. 5A is a schematic view illustrating an imaging apparatus to which a first modification example of the parameter adjustment device is applied. Fig. 5B is a view illustrating the enlarged input device which functions as the parameter adjustment device.

As shown in Figs. 5A and 5B, an input device 1a is common with the above-described input device 1 in that the input device 1a includes a first operation part M1 and a second operation part M2. In addition, the input device 1a is common with the above-described input device 1 in that a parameter adjustment unit which is assigned to the operation with regard to the first operation part M1 is different from a parameter adjustment unit which is assigned to the operation with regard to the second operation part M2.

Here, in the first modification example, a function which is realized by performing the operation with regard to the first operation part M1 and a function which is realized by performing the operation with regard to the second operation part M2 are replaced with each other according to the position of the electronic equipment. This is different from the above-described input device 1 which functions as the parameter adjustment device. More specifically, the parameter adjustment unit which is assigned to the operation with regard to the first operation part M1 and the parameter adjustment unit which is assigned to the operation with regard to the second operation part M2 are replaced with each other according to the position of the electronic equipment to which the parameter adjustment device is applied.

For example, when an imaging apparatus is selected as the electronic equipment to which the parameter adjustment device according to the present disclosure is applied, a situation, in which the imaging apparatus is used in a state which is different from the horizontal state, is considered due to the characteristics of the imaging apparatus. For example, as shown in Fig. 5A, it may be considered that the user performs photographing while holding the imaging apparatus sideways. Fig. 5A illustrates a state in which the imaging apparatus 11 is rotated by approximately -90° from the horizontal state and the bottom surface of the imaging apparatus 11 is approximately in parallel with an YZ surface. Hereinafter, the state in which the bottom surface of the imaging apparatus is approximately in parallel with the YZ surface is appropriately called a "vertical state".

When the imaging apparatus is in the vertical state, the input device is also in a state in which the input device is rotated by approximately -90° (or +90°). Here, in the first modification example of the parameter adjustment device, the seamless image zoom function and the discrete image zoom function are replaced with each other according to whether the imaging apparatus is in the horizontal state or the vertical state.

For example, when the imaging apparatus 11 is in the horizontal state, the image zoom adjustment unit with regard to the operation which is performed on the first operation part M1 is considered to be a unit such that the subject image displayed on the display part 3 is seamlessly changed according to a time at which the first operation part M1 is pressed down. In addition, the image zoom adjustment unit with regard to the operation which is performed on the second operation part M2 is considered to be a unit in which the subject image displayed on the display part 3 is discretely changed according to the number of times that the second operation part M2 is pressed down.

In contrast, when the imaging apparatus 11 is in the vertical state, the image zoom adjustment unit with regard to the operation which is performed on the first operation part M1 is considered to be a unit such that the subject image displayed on the display part 3 is discretely changed according to the number of times that the first operation part is pressed down. In addition, the image zoom adjustment unit with regard to the operation which is performed on the second operation part M2 is considered to be a unit in which the subject image displayed on the display part 3 is seamlessly changed according to a time at which the second operation part M2 is pressed down.

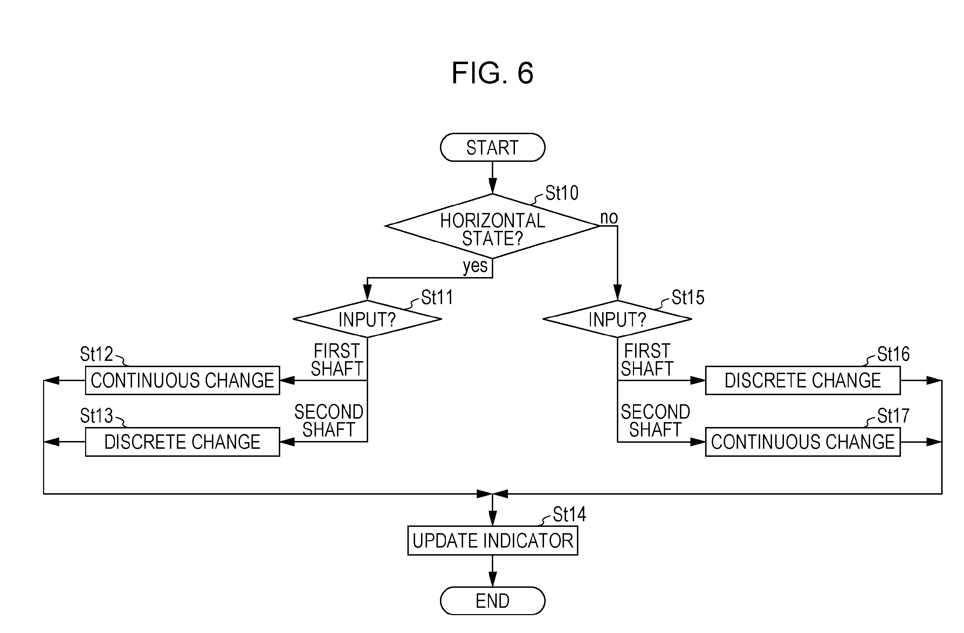

Fig. 6 is a flowchart illustrating an example of electronic equipment control according to the position of the electronic equipment. A series of processes which will be described with reference to Fig. 6 are performed by, for example, the control part 61. Here, a state is assumed that the screen which is displayed on the display part 3 is transitioned to the zoom setting screen.

First, in step St10, it is determined whether the electronic equipment to which the parameter adjustment device is applied is in the horizontal state or in the vertical state. Meanwhile, it is possible to realize the detection of the posture of the electronic equipment by installing, for example, a sensor, such as an acceleration sensor or a gyro sensor, in the electronic equipment.

When it is determined that the electronic equipment to which the parameter adjustment device is applied is in the horizontal state, the process proceeds to step St11.

In step St11, it is determined whether or not an input is performed on the input device 1a by the user.

When the input operation which is performed by the user is the operation with regard to the first operation part M1 which is arranged on the first axis, the image which is displayed on the display part 3 is seamlessly changed in step St12. In contrast, when the input operation which is performed by the user is the operation with regard to the second operation part M2 which is arranged on the second axis, the image which is displayed on the display part 3 is discretely changed in a logarithmical step in step St13.

Subsequently, in step St14, the image of the indicator 7 is rewritten according to the change in the amount of parameter adjustment.

In contrast, when the electronic equipment is not in the horizontal state, that is, when the electronic equipment is in the vertical state in step St10, the process proceeds to step St15.

In step St15, it is determined whether or not an input is performed on the input device 1a by the user.

When the input operation which is performed by the user is the operation with regard to the first operation part M1 which is arranged on the first axis, the image which is displayed on the display part 3 is discretely changed in a logarithmical step in step St16. In contrast, when the input operation which is performed by the user is the operation with regard to the second operation part M2 which is arranged on the second axis, the image which is displayed on the display part 3 is seamlessly changed in step St17.

Subsequently, in step St14, the image of the indicator 7 is rewritten according to the change in the amount of parameter adjustment.

Meanwhile, the direction of the indicator may be adjusted according to whether the electronic equipment to which the parameter adjustment device is applied is in the horizontal state or in the vertical state. For example, if the indicator is displayed sideways when the imaging apparatus is in the horizontal state and the indicator is displayed sideways even when the imaging apparatus is in the vertical state, the user easily understand the change in the amount of parameter adjustment intuitively.

In addition, two ways, that is, -90° and +90°, are considered as the direction of rotation from the horizontal state to the vertical state. Therefore, for example, if zoom out is usually assigned to an operation which is performed on a key which is positioned on the left side when viewed from the user and zoom in is usually assigned to an operation which is performed on a key which is positioned on the right side when viewed from the user, the user easily understand the relation between the input and result intuitively.

As above, in the first modification example of the parameter adjustment device, functions are respectively assigned to the first axis and the second axis, and the functions which are respectively assigned to the first axis and the second axis are replaced with each other according to the posture of the electronic equipment to which the parameter adjustment device is applied. Therefore, the user does not lose sense of operation and the user can cause the electronic equipment to perform a desired motion while not paying attention to whether the electronic equipment to which the parameter adjustment device is applied is in the horizontal state or the vertical state. 1-3. Second Modification Example of Parameter Adjustment Device

In the above-described first modification example, functions which are respectively assigned to the first axis and the second axis are replaced with each other according to the posture of the electronic equipment to which the parameter adjustment device is applied. However, in the example, a function which is assigned to one axis is invalid.

Although imaging apparatuses, which have both still image photographing and video photographing functions, have become common in recent years, video photographing has required seamless image zoom adjustment. Here, for example, it is assumed that the image zoom adjustment unit with regard to the operation which is performed on the first operation part M1 is set to a unit in which the subject image displayed on the display part 3 is seamlessly changed according to the time at which the first operation part M1 is pressed down. At this time, in a second modification example of the parameter adjustment device, the operation with regard to the second operation part M2 becomes an invalid operation such that the rapid change in the angle of view which is not intended by the user does not occur.

Meanwhile, with the invalidation of the function which is assigned to one axis, the functions which are respectively assigned to the first axis and the second axis may be replaced with each other according to the posture of the electronic equipment to which the parameter adjustment device is applied.

That is, for example, when the imaging apparatus is in the horizontal state, the image zoom adjustment unit with regard to the operation which is performed on the first operation part M1 is set to a unit such that the subject image which is displayed on the display part 3 is seamlessly changed according to the time at which the first operation part M1 is pressed down. At this time, the operation with regard to the second operation part M2 is invalid.

In contrast, when the imaging apparatus is in the vertical state, the image zoom adjustment unit with regard to the operation which is performed on the second operation part M2 is set to a unit such that the subject image which is displayed on the display part 3 is seamlessly changed according to the time at which the second operation part M2 is pressed down. At this time, the operation with regard to the first operation part M1 is invalid.

As described above, when a parameter is selected while video photographing is performed as the parameter which is assigned to the operation with regard to the first operation part M1 or the second operation part M2 from a point of view to prevent incorrect operation from being performed by the user, it is convenient to invalidate the function which is assigned to one axis. That is, while video photographing is performed, it is possible to prevent the rapid change in the angle of view, which is not intended by the user, by using one of the first operation part M1 and the second operation part M2 to adjust the parameter and by invalidating an operation which is performed on the other part.

### 1-4. Third Modification Example of Parameter Adjustment Device

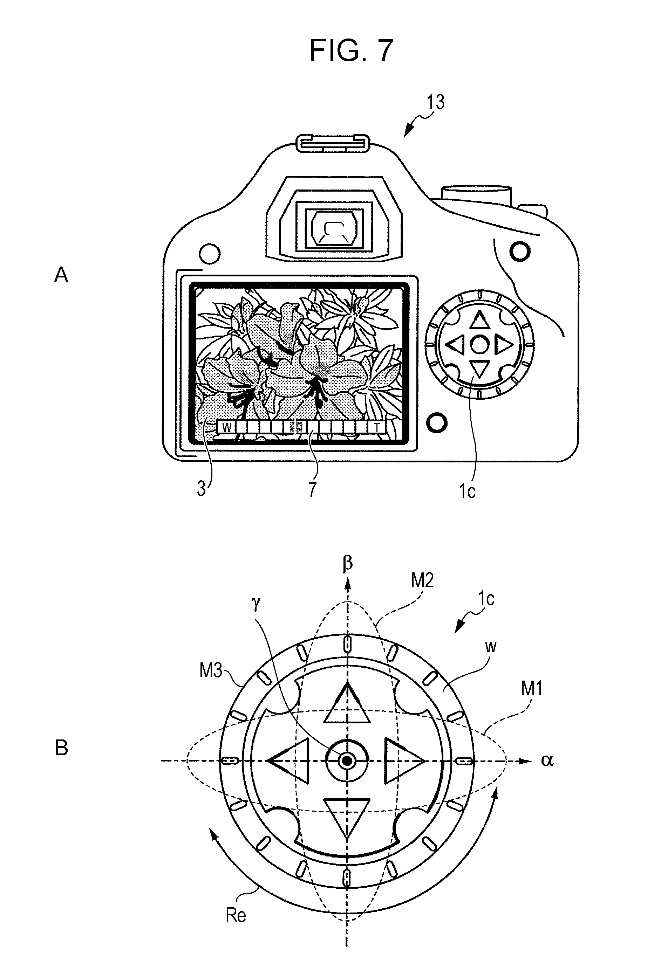

Fig. 7A is a schematic view illustrating an imaging apparatus to which a third modification example of the parameter adjustment device is applied. Fig. 7B is a view illustrating the enlarged input device which functions as the parameter adjustment device.

As shown in Figs. 7A and 7B, an input device 1c is common with the above-described input device 1 in that the input device 1c includes a first operation part M1 and a second operation part M2. In the example, the input device 1c is different from the above-described input device 1 in that the input device 1c which functions as the parameter adjustment device further includes a third operation part M3 as shown in Figs. 7A and 7B.

The third operation part M3 is an operation part which receives, for example, a dial operation. That is, the input device 1c includes, for example, a wheel w which freely rotates in the surface of the input device 1c as shown by an arrow Re in Fig. 7B. The wheel w is provided such that the user can acquire a moderate clicking feeling at every rotation for a prescribed angle by providing, for example, a plurality of notches. That is, the user can grasp the amount of rotation of the wheel w by touching the notches when the dial operation is performed.

The third operation part M3 is arranged on a third axis corresponding to the rotation axis of the wheel w. In Fig. 7B, the third axis is indicated as a "γ axis". The γ axis shown in Fig. 7B is an axis which is perpendicular to the α axis and the β axis.

Similar to the first operation part M1 and the second operation part M2, the third operation part M3 is used to adjust, for example, a parameter for photographing or content reproduction in the imaging apparatus. In the example, parameter adjustment units which are respectively assigned to operations with regard to the first operation part M1, the second operation part M2, and the third operation part M3 are different from each other.

More specifically, for example, an image zoom adjustment unit is set to the operation which is performed on the first operation part M1 such that the subject image which is displayed on the display part 3 is seamlessly changed according to the time at which the first operation part M1 is pressed down. In addition, for example, an image zoom adjustment unit is set to the operation which is performed on the second operation part M2 such that the subject image which is displayed on the display part 3 is discretely changed according to the number of times that the second operation part M2 is pressed down. The image zoom adjustment unit is logarithmically set to, for example, 1 time, 1.4 times, 2 times, 2.8 times, or the like at this time.

In contrast, for example, similar to the case of the second operation part M2, an image zoom adjustment unit, in which the subject image displayed on the display part 3 is discretely changed according to the amount of rotation of the wheel w of the third operation part M3, is set to the operation which is performed on the third operation part M3.

The image zoom adjustment unit at this time is different from that in the case of the second operation part M2, for example, the image zoom adjustment unit is set to an equal interval such as 0.1 times.

A reason that an equal interval or a minute unit is assigned to the third operation part M3 which receives the dial operation as the parameter adjustment unit is that it is easy to cause the user to intuitively grasp the change in zoom magnifications by feeding a moderate clicking feeling back to the user.

Therefore, whenever the wheel w of the third operation part M3 is rotated by a prescribed angle, the image zoom magnification changes by, for example, 0.1 times, and thus the user can cause the imaging apparatus 13 to perform further minute image zoom.

When, for example, an imaging apparatus is selected as the electronic equipment to which the parameter adjustment device of the present disclosure is applied, a situation in which the imaging apparatus is used in a state being supported by a tripod is considered. When the user performs photographing while supporting the imaging apparatus using the tripod, the same composition is maintained because the imaging apparatus is supported by the tripod. In contrast, it is difficult for the user to freely change the composition, and thus a need for a minute designation of the angle of view is generated.

In the example, the parameter adjustment device includes the third operation part M3 which receives the dial operation, and an equal interval and a minute unit are assigned to, for example, the third operation part M3 as the parameter adjustment unit. Therefore, according to the present disclosure, it is possible to realize both more rapid image zoom and further minute image zoom in the imaging apparatus.

### 2. Second Embodiment

### 2-1. Schematic Configuration of Parameter Adjustment Device

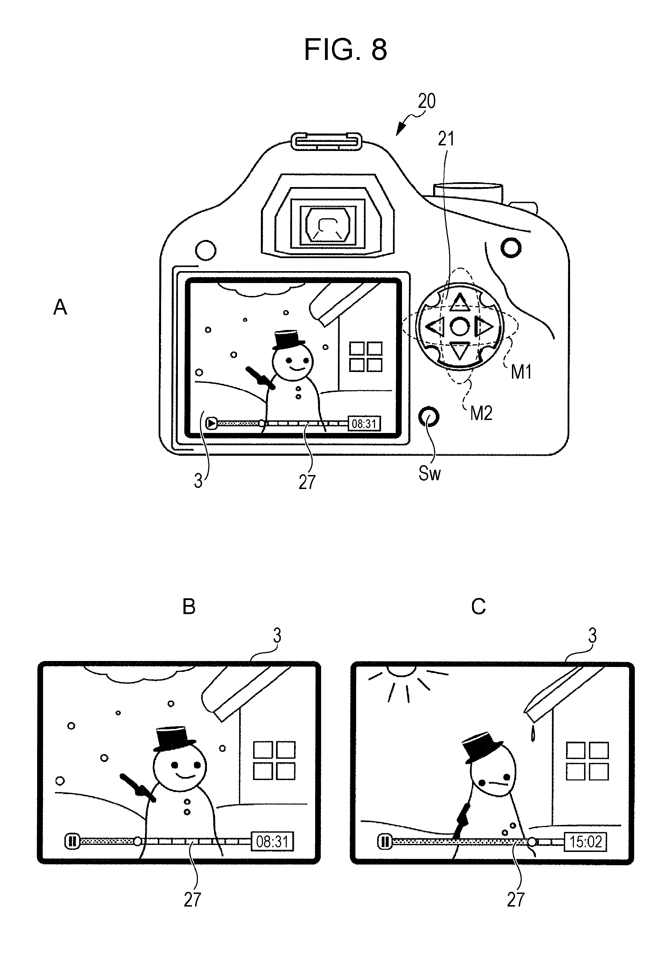

Fig. 8A is a view illustrating an imaging apparatus which includes a parameter adjustment device according to a second embodiment. Fig. 8A illustrates an example of a configuration, in which an imaging apparatus 20 is an imaging apparatus having a video photographing function and in which a photographed video is capable of being reproduced by a display part 3 which is arranged, for example, in the main body part of the imaging apparatus 20.

In the above-described first embodiment, the configuration in which parameters for designating the degree of image zoom are assigned to the operation with regard to the first operation part M1 and the operation with regard to the second operation part M2 is described as an example. The second embodiment is common with the first embodiment in that a parameter adjustment unit which is assigned to the operation with regard to the first operation part M1 is different from a parameter adjustment unit which is assigned to the operation with regard to the second operation part M2. The second embodiment is different from the first embodiment in that a parameter for designating a spot where the content reproduction starts is assigned to the operation with regard to the first operation part M1 or the operation with regard to the second operation part M2.

Figs. 8B and 8C are image views illustrating examples which are displayed on a display part.

In the second embodiment, for example, a screen for indicating a position where the reproduction of a captured video starts (hereinafter, appropriately referred to as a "start position designation screen") is prepared, and the screen which is displayed on the display part 3 is transitioned to the start position designation screen by pressing down, for example, the mode conversion button Sw. The start position designation screen is, for example, a screen in which a current reproduction position is displayed by the indicator 27 while being superimposed on the video which is being reproduced as shown in Figs. 8B and 8C.

When the parameter adjustment device includes the start position designation screen, it is possible to effectively utilize both the first axis and the second axis of the parameter adjustment device even in a case of, for example, the reproduction of content such as video.

That is, for example, an adjustment unit for fast-forwarding or rewinding is set to the operation which is performed on the first operation part M1 such that a video reproduction start position is seamlessly changed according to the time at which the first operation part M1 is pressed down. That is, the user can adjust the position where the video reproduction starts while recognizing an image, which is seamlessly changed, by successively operating (pressing down) the first operation part M1 for a desired time.

For example, the adjustment unit for fast-forwarding or rewinding is set to the operation which is performed on the second operation part M2 such that the video reproduction start position is discretely changed according to the number of times that the second operation part M2 is pressed down.

That is, for example, the parameter adjustment unit which is assigned to the operation with regard to the second operation part M2 is greater than the parameter adjustment unit which is assigned to the operation with regard to the first operation part M1. Therefore, the user can adjust the position where the video reproduction starts while recognizing an image, which is discretely changed, by operating (pressing down) the second operation part M2 a desired number of times.

For example, a content unit may be used as an example of the adjustment unit for fast-forwarding or rewinding with regard to the operation which is performed on the second operation part M2. In this case, when the user operates the second operation part M2, the user can sequentially recognize the first part of each video by sequentially performing conversion on, for example, a plurality of video data.

Meanwhile, when the content, such as video, is divided into, for example, a plurality of chapters, it is possible to set, for example, a chapter unit as the adjustment unit for fast-forwarding or rewinding with regard to the operation is performed on the second operation part M2. At this time, the operation which is performed on the second operation part M2 is an operation for jumping between the chapters.

In addition, a suitable time interval, such as a 1-minute unit, a 5-minute unit, or a 10-minute unit, may be set as, for example, the adjustment unit for fast-forwarding or rewinding with regard to the operation which is performed on the second operation part M2. A setting may be made such that the user can arbitrarily set a desired time interval as the adjustment unit for fast-forwarding or rewinding with regard to the operation which is performed on the second operation part M2.

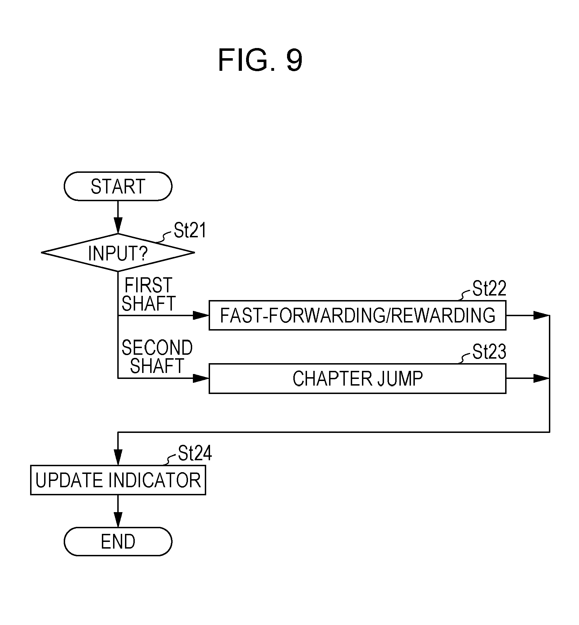

Fig. 9 is a flowchart illustrating an example of electronic equipment control with regard to an instruction from the input device which functions as the parameter adjustment device. A series of processes which will be described below with reference to Fig. 9 are performed by, for example, the control part 61. Here, a state is assumed that the screen which is displayed on the display part 3 is transitioned to the start position designation screen.

First, in step St21, it is determined whether or not an input is performed on the input device 21 by the user.

When the input operation which is performed by the user is the operation with regard to the first operation part M1 which is arranged on the first axis, a video which is displayed on the display part 3 is seamlessly changed in step St22. In contrast, when the input operation which is performed by the user is the operation with regard to the second operation part M2 which is arranged on the second axis, the video which is displayed on the display part 3 is discretely changed by, for example, a chapter unit in step St23.

Subsequently, in step St24, an image of the indicator 27 is rewritten according to the change in the amount of parameter adjustment.

As described above, in the present disclosure, it is possible to seamlessly and discretely adjust the position where the video reproduction starts by performing, for example, an operation with regard to the horizontal direction or the vertical direction in the single input device. Therefore, according to the present disclosure, it is possible to realize the seamless and discrete adjustment of the position where the video reproduction starts with the same sense of operation.

Further, according to the present disclosure, compared to a case in which the seamless and discrete adjustments of the position where video reproduction starts are respectively assigned to individual input devices, it is possible to rapidly designate the position where video reproduction starts.

### 3. Third Embodiment

### 3-1. Schematic Configuration of Parameter Adjustment Device

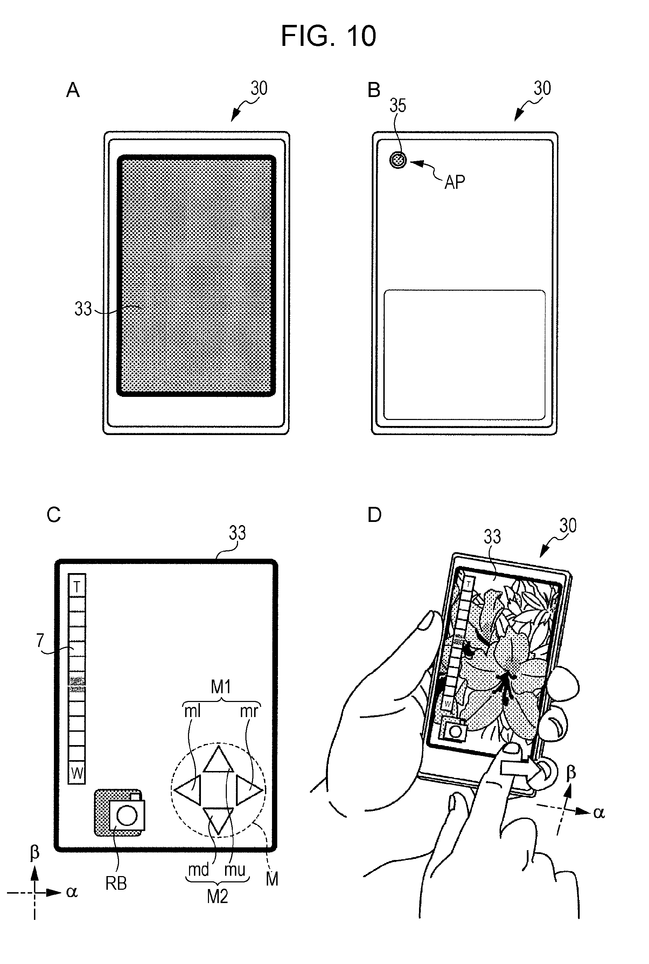

Fig. 10A is a front view illustrating an imaging apparatus which includes a parameter adjustment device according to a third embodiment. Fig. 10B is a back view illustrating the imaging apparatus which includes the parameter adjustment device according to the third embodiment.

In the above-described first embodiment, the example of the configuration, in which the parameter for designating the degree of image zoom is assigned to the operation with regard to the first operation part M1 or the operation with regard to the second operation part M2, is shown. The third embodiment is common with the first embodiment in that the parameter adjustment unit which is assigned to the operation with regard to the first operation part M1 is different from the parameter adjustment unit which is assigned to the operation with regard to the second operation part M2. The third embodiment is different from the first embodiment in that the first operation part M1 and the second operation part M2 are formed of a touch panel.

In the third embodiment, as shown in Fig. 10A, a display part 33 is a display which includes a function of the touch panel. Therefore, the display part 33 includes a function of an input device which functions as a parameter adjustment device for receiving input from a user, and displays results of a process with regard to the input from the user.

An imaging part 35 which includes an imaging element is arranged inside of the housing of an imaging apparatus 30. A window part AP corresponding to the imaging part 35 is provided on, for example, the back side of the housing of the imaging apparatus 30, as shown in Fig. 10B. Meanwhile, a shutter, a lens, or the like is disposed between the window part AP and the imaging part 35 which are provided in the housing if necessary.

Fig. 10C is an image view illustrating an example of an image which is displayed on the display part. Fig. 10C illustrates an example of the image which is displayed in a zoom setting screen.

In the zoom setting screen, for example, a subject image and an indicator 7 which shows the magnification of the current zoom, are displayed on the display part 33. Meanwhile, the subject image is not shown in Fig. 10C in order to avoid the complication of the drawing.

In the third embodiment, for example, an icon RB corresponding to a release button and an icon M configured to include, for example, four triangles are displayed in addition to the subject image and the indicator 7.

Two of the four triangles included in the icon M, that is, ml and mr are arranged on, for example, a first axis and are included in the first operation part M1. In addition, two of the four triangles included in the icon, that is, mu and md are arranged on, for example, a second axis and are included in the second operation part M2.

For example, an image zoom adjustment unit is set to an operation which is performed on the first operation part M1 such that the subject image which is displayed on the display part 33 is seamlessly (successively) changed according to the time at which the first operation part M1 is pressed down. In addition, for example, an image zoom adjustment unit is set to the operation which is performed on the second operation part M2 such that the subject image which is displayed on the display part 33 is discretely changed according to the number of times that the second operation part M2 is pressed down.

In the first embodiment and the second embodiment, the operation which is performed on the first operation part M1 and the operation which is performed on the second operation part M2 are mechanically detected. In contrast, in the third embodiment, the operation which is performed on the first operation part M1 and the operation which is performed on the second operation part M2 are detected in such a way that the user touches a Graphical User Interface (GUI).

That is, when the user continues touching the first operation part M1 of the icon M for a desired time, the user can adjust the zoom magnification in the imaging apparatus 30 while recognizing an image which is seamlessly changed. In addition, when the user touches the second operation part M2 of the icon only a desired number of times, the user can adjust the zoom magnification in the imaging apparatus 30 while recognizing an image which is discretely changed.

Meanwhile, in the present disclosure, functions to adjust a single parameter are respectively assigned to the operation which is performed on the first operation part M1 and the operation which is performed on the second operation part M2. Therefore, it is possible to execute the imaging apparatus by combining the seamless image zoom with the discrete image zoom without displaying particular icons or the like which are used to instruct adjustment of image zoom.

Fig. 10D is a schematic view illustrating another example of an input operation with regard to the imaging apparatus. Fig. 10D illustrates an example of a configuration in which the particular icons or the like which are used to instruct adjustment of image zoom are not displayed on the display part 33.

In this case, the user can perform the seamless image zoom or the discrete image zoom by performing a "tracing operation" performed along the first axis or the second axis or a so-called "flicking operation", as shown in Fig. 10D.

According to the third embodiment, it is possible to realize the same functions as in the cases of the first embodiment and the second embodiment even in a device which does not include an operation member, such as the cross-shaped key, having a specific axis.

As described above, in the present disclosure, a function to adjust a single parameter is allocated to an operation with regard to each of a plurality of axes having different inclinations. For example, a horizontal axis, a vertical axis, and the like are used in, for example, an operation member, such as a cross-shaped key, which includes a plurality of axes having different inclinations. Therefore, it is possible to adjust a single parameter by a single input device using different adjustment units. That is, in the adjustment of a set parameter meaning the amount of change in parameter, such as zoom magnification, the adjustment of the set parameter is not limited to only any one of an adjustment using a large unit and an adjustment using a small unit. An operation using different operation systems, such as a key repeating operation and a toggling operation, is not necessary in order to perform conversion on the adjustment using a large unit and the adjustment using a small unit in the adjustment of a single parameter.

In addition, the operation which is performed to adjust a parameter is a symmetrical operation such as right and left or up and down, and the change in the amount of parameter adjustment which is the result of the operation is shown to the user in association with the symmetrical operation. Therefore, instinctive sense of operation is realized while preventing incorrect operation. Therefore, according to the present disclosure, a user of electronic equipment can instinctively perform different operations with regard to a single parameter.

In addition, according to the present disclosure, it is possible to adjust a single parameter by a single input device using different adjustment units without providing different operation devices or different operation systems. Therefore, like in the rapid setting of a targeted angle of view, in the setting of a minute angle of view acquired in a case in which a tripod or the like is used when still images are photographed, it is possible to meet the needs of a user who seeks for a different sense of operation with regard to, for example, a single parameter, such as angle of view.

Further, it is possible to apply the technology according to the present disclosure to a general-purpose input unit, such as a cross-shaped key or a touch panel, and thus it is easy to apply the technology according to the present disclosure to existing equipment. In addition, it is not necessary to provide new special levers, buttons, or the like to electronic equipment which has various set values. That is, operation members are reduced or functionality is improved while not damaging the sense of beauty using the technology according to the present disclosure, and thus it is possible to increase the commercial value of electronic equipment.

As above, according to the present disclosure, it is possible to improve operability in electronic equipment which includes various set values.

### 4. Modification Example

Hereinabove, although the preferable embodiments have been described, preferable concrete examples are not limited to the above-described examples and various modifications are possible.

In the above-described embodiment, an example of the imaging apparatus which includes the parameter adjustment device is shown. However, application of the parameter adjustment device is not limited to the example. The parameter adjustment device of the present disclosure can be applied to, for example, every piece of electronic equipment, such as a mobile phone, a smart phone, an electronic book, an audio player, a personal computer (tablet type, lap top type, and desktop type), a mobile information terminal (Personal Digital Assistance (PDA)), an electronic dictionary, an electronic organizer, a television receiver, a video game machine, and the like. Further, it is also possible to dispose the parameter adjustment device according to the present disclosure on, for example, a remote controller in addition to the main body of the electronic equipment.

In addition, in the above-described embodiment, description has been made such that the imaging apparatus to which the parameter adjustment device is applied is an imaging apparatus using a digital manner. However, a technology according to the present disclosure may be applied even when the imaging part is a film.

Meanwhile, the configurations, the methods, the shapes, the numerical values, and the like which have been described in the above-described embodiments are only examples. Further, different configurations, methods, shapes, numerical values, and the like may be used if necessary. The configurations, the methods, the shapes, the numerical values, and the like in the above-described embodiments can be combined with each other without departing from the gist of the present disclosure.

For example, the present disclosure can include the following configurations:
(1) A parameter adjustment device including: a first operation part that is used to adjust a parameter for photographing or content reproduction and is arranged on a first axis; and a second operation part that is used to adjust the parameter and is arranged on a second axis which has an inclination different from an inclination of the first axis. A parameter adjustment unit, which is assigned to an operation with regard to the first operation part, is different from a parameter adjustment unit, which is assigned to an operation with regard to the second operation part.
(2) In the parameter adjustment device of (1), the parameter is a parameter which is used for still image photographing.
(3) In the parameter adjustment device of (1), the parameter is a parameter which is used for video photographing, and, when one of the first operation part and the second operation part is used to adjust the parameter, an operation which is performed on another one of the first operation part and the second operation part is invalid.
(4) In the parameter adjustment device of any one of (1) to (3), the parameter is a zoom parameter.
(5) In the parameter adjustment device of (1), the parameter is a parameter which designates a spot where the content reproduction starts.
(6) In the parameter adjustment device of any one of (1) to (5), the parameter adjustment unit which is assigned to the operation with regard to the second operation part is greater than the parameter adjustment unit which is assigned to the operation with regard to the first operation part.
(7) In the parameter adjustment device of any one of (1) to (6), the parameter adjustment unit which is assigned to the operation with regard to the first operation part changes according to a set parameter.
(8) In the parameter adjustment device of any one of (1) to (7), the first axis is an axis which is perpendicular to the second axis.
(9) In the parameter adjustment device of (8), the first operation part and the second operation part form a cross-shaped key.
(10) In the parameter adjustment device of any one of (1) to (8), the first operation part and the second operation part are formed of a touch panel.
(11) The parameter adjustment device of any one of (1) to (10) further includes a third operation part that is used to adjust the parameter, and the third operation part is an operation part which receives a dial operation.
(12) In the parameter adjustment device of (11), the parameter adjustment unit which is assigned to the operation with regard to the first operation part, the parameter adjustment unit which is assigned to the operation with regard to the second operation part, and a parameter adjustment unit which is assigned to an operation with regard to the third operation part are different from each other.
(13) The parameter adjustment device of any one of (1) to (12) further includes a display part, and, when different adjustment units are assigned as the parameter adjustment units to the operation with regard to the first operation part and the operation with regard to the second operation part, a screen which is displayed on the display part is transitioned to a screen for assigning the different adjustment units with regard to the first axis and the second axis.
(14) In the parameter adjustment device of (13), the parameter is displayed on the display part by an indicator.
(15) The parameter adjustment device of any one of (1) to (14) further includes an imaging part.
(16) A parameter adjustment method performed on a first operation part that is used to adjust a parameter for photographing or content reproduction and is arranged on a first axis and a second operation part that is used to adjust the parameter and is arranged on a second axis which has an inclination different from an inclination of the first axis. A parameter adjustment unit, which is assigned to an operation with regard to the first operation part, and a parameter adjustment unit, which is assigned to an operation with regard to the second operation part are different in size.
(17) A computer-readable recording medium which records a program that causes a computer to perform execution on a first operation part that is used to adjust a parameter for photographing or content reproduction and is arranged on a first axis and a second operation part that is used to adjust the parameter and is arranged on a second axis which has an inclination different from an inclination of the first axis. A parameter adjustment unit, which is assigned to an operation with regard to the first operation part, and a parameter adjustment unit, which is assigned to an operation with regard to the second operation part are different in size.

### Reference Signs List

1, 1a, 1c, 21 INPUT DEVICE, 3, 33 DISPLAY PART, 5 IMAGING PART, 7, 27 INDICATOR, 9 STORAGE DEVICE, 10, 11, 13, 20, 30 IMAGING APPARATUS, 101 PARAMETER ADJUSTMENT DEVICE, M1 FIRST OPERATION PART, M2 SECOND OPERATION PART, M3 THIRD OPERATION PART

## Claims

1. A parameter adjustment device comprising:
a first operation part that is used to adjust a parameter for photographing or content reproduction and is arranged on a first axis; and
a second operation part that is used to adjust the parameter and is arranged on a second axis which has an inclination different from an inclination of the first axis,
wherein a parameter adjustment unit, which is assigned to an operation with regard to the first operation part, is different from a parameter adjustment unit, which is assigned to an operation with regard to the second operation part.

2. The parameter adjustment device according to claim 1,
wherein the parameter is a parameter which is used for still image photographing.

3. The parameter adjustment device according to claim 1,
wherein the parameter is a parameter which is used for video photographing, and
wherein, when one of the first operation part and the second operation part is used to adjust the parameter, an operation which is performed on another one of the first operation part and the second operation part is invalid.

4. The parameter adjustment device according to claim 1,
wherein the parameter is a zoom parameter.

5. The parameter adjustment device according to claim 1,
wherein the parameter is a parameter which designates a spot where the content reproduction starts.

6. The parameter adjustment device according to claim 1,
wherein the parameter adjustment unit which is assigned to the operation with regard to the second operation part is greater than the parameter adjustment unit which is assigned to the operation with regard to the first operation part.

7. The parameter adjustment device according to claim 1,
wherein the parameter adjustment unit which is assigned to the operation with regard to the first operation part changes according to a set parameter.

8. The parameter adjustment device according to claim 1,
wherein the first axis is an axis which is perpendicular to the second axis.

9. The parameter adjustment device according to claim 8,
wherein the first operation part and the second operation part form a cross-shaped key.

10. The parameter adjustment device according to claim 1,
wherein the first operation part and the second operation part are formed of a touch panel.

11. The parameter adjustment device according to claim 1, further comprising:
a third operation part that is used to adjust the parameter,
wherein the third operation part is an operation part which receives a dial operation.

12. The parameter adjustment device according to claim 11,
wherein the parameter adjustment unit which is assigned to the operation with regard to the first operation part, the parameter adjustment unit which is assigned to the operation with regard to the second operation part, and a parameter adjustment unit which is assigned to an operation with regard to the third operation part are different from each other.

13. The parameter adjustment device according to claim 1, further comprising:
a display part,
wherein, when different adjustment units are assigned as the parameter adjustment units to the operation with regard to the first operation part and the operation with regard to the second operation part, a screen which is displayed on the display part is transitioned to a screen for assigning the different adjustment units with regard to the first axis and the second axis.

14. A parameter adjustment method performed on a first operation part that is used to adjust a parameter for photographing or content reproduction and is arranged on a first axis, and a second operation part that is used to adjust the parameter and is arranged on a second axis which has an inclination different from an inclination of the first axis,
wherein a parameter adjustment unit, which is assigned to an operation with regard to the first operation part, and a parameter adjustment unit, which is assigned to an operation with regard to the second operation part are different in size.

15. A computer-readable recording medium which records a program that causes a computer to perform execution on a first operation part that is used to adjust a parameter for photographing or content reproduction and is arranged on a first axis, and a second operation part that is used to adjust the parameter and is arranged on a second axis which has an inclination different from an inclination of the first axis,
wherein a parameter adjustment unit, which is assigned to an operation with regard to the first operation part, and a parameter adjustment unit, which is assigned to an operation with regard to the second operation part are different in size.
